# EUROPEAN PATENT SPECIFICATION

(11) **EP 4 310 637 B1**
(45) Date of publication and mention of the grant of the patent: **13.11.2024**
(21) Application number: 23179792.9
(22) Date of filing: 16.06.2023
(51) Int. Cl.: G06F 3/01, G06F 3/0346, G06F 3/03, G06F 1/16, G06V 10/62, G06V 10/94, G06V 40/20

(54) **SYSTEM AND METHOD FOR REMOTELY CONTROLLING EXTENDED REALITY BY VIRTUAL MOUSE**
SYSTEM UND VERFAHREN ZUR FERNSTEUERUNG EINER ERWEITERTEN REALITÄT DURCH VIRTUELLE MAUS
SYSTÈME ET PROCÉDÉ DE COMMANDE À DISTANCE DE RÉALITÉ ÉTENDUE PAR SOURIS VIRTUELLE

(30) Priority: 22.07.2022 US 202263391322 P
(43) Date of publication of application: 24.01.2024
(73) Proprietor: HTC Corporation, Taoyuan City 330, (TW)
(72) Inventor: LAI, Chao-Hsiang, Taoyuan City 330 (TW); HSIEH, Cheng-Han, Taoyuan City 330 (TW); CHANG, Tzu-Yin, Taoyuan City 330 (TW)
(74) Representative: Pritzlaff, Stefanie Lydia

(56) References cited:
- WO-A1-2018/223397
- US-A1- 2015 205 360
- US-A1- 2019 265 781
- US-A2- 2015 309 263

## Description

### BACKGROUND

### Technical Field

The disclosure relates to extended reality (XR) technology, and particularly related to a system and a method for remotely controlling extended reality by a virtual mouse.

### Description of Related Art

Along with the improvement of technology, head mount displays (HMD) with XR function become more and more popular. An HMD may create an XR environment for a user such that the user may interact with virtual objects shown in the XR scene provided by the XRa environment. The user of the HMD may perform a hand gesture to interact with the XR environment. However, interacting with the XR environment by the hand gesture may cause a lot of problems, for example, the HMD may receive unexpected input cause by occlusion issues. In addition, performing hand gesture may fatigue the user. On the other hand, the user of the HMD may interact with the XR environment by using a remote controller. However, interacting with the XR environment by the remote controller is inconvenient for the user. For example, the user has to establish the mapping relationship between the bottom of the remote controller and the XR function. Furthermore, since the user using the remote controller cannot be hand free, the remote controller is not suitable for the augmented reality (AR) system.

US 2015/0205360 A1 discloses a method, including: capturing, using an image sensor of an information handling device, a user gesture input; determining, using a processor, that the user gesture input comprises an activating gesture input; capturing, using the image sensor of the information handling device, controlling gesture input of the user; detecting, within the captured controlling gesturing input, gestures provided on a surface and mimicking use of a mouse; and controlling an application running on the information handling device based on the controlling gesture input of the user.

US 2019/0265781 A1 discloses an augmented reality or virtual reality (AR/VR) system including a virtual input device that can be rendered by an HMD, and a wearable impact detection device, such as a ring, smart watch, wristband, etc. with an inertial measurement unit (IMU), that can be used in conjunction with the HMD to track a location of the user's hands relative to the perceived location of the rendered virtual keyboard using, e.g., vision-based tracking via the HMD and determine when an intended input (e.g., button press) is entered by the user by detecting an impact of the user's finger(s) on a physical surface. The AR/VR system can then determine which key is pressed based on the physical location of the user's hands (e.g., using the vision-based tracking) and, more precisely, the user's finger(s) causing the detected impact and the closest key of the virtual input device to the detected point of impact.

### SUMMARY

The disclosure is directed to a system and a method for remotely controlling extended reality by a virtual mouse.

The present invention is directed to a system for remotely controlling extended reality by a virtual mouse, as set forth in claim 1.

The present invention is further directed to a method for remotely controlling extended reality by a virtual mouse, as set forth in claim 13.

Preferred embodiments of the present invention may be gathered from the dependent claims.

Based on the above description, the present invention provides a convenient and intuitive way for the user of an HMD to interact with the XR environment.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of a usage scenario of a system for remotely controlling extended reality by a virtual mouse according to one embodiment of the present invention.
FIG. 2 illustrates a schematic diagram of the system according to the one embodiment of the present invention.
FIG. 3 illustrates a method for detecting a control mode for the XR scene according to one embodiment of the present invention.
FIG. 4 illustrates a schematic diagram of a result of the hand tracking according to one embodiment of the present invention.
FIG. 5 illustrates a schematic diagram of performing a move operation of the virtual mouse by using hand tracking according to one embodiment of the present invention.
FIG. 6 illustrates a schematic diagram of performing a click operation by using one remote controller according to one embodiment of the present invention.
FIG. 7 illustrates a schematic diagram of performing a click operation by using multiple remote controllers according to one embodiment of the present invention.
FIG. 8 illustrates a schematic diagram of performing a scroll operation by using a remote controller according to one embodiment of the present invention.
FIG. 9 illustrates a schematic diagram of a remote controller with an optical sensor according to one embodiment of the present invention.
FIG. 10 illustrates a flowchart of a method for remotely controlling extended reality by a virtual mouse according to one embodiment of the present invention.

### DESCRIPTION OF THE EMBODIMENTS

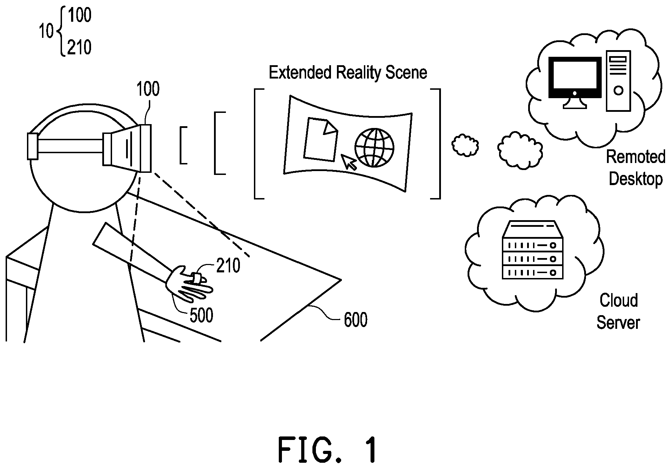

FIG. 1 illustrates a schematic diagram of a usage scenario of a system 10 for remotely controlling extended reality by a virtual mouse according to one embodiment of the present invention, wherein the system 10 includes an HMD 100 worn on a user's head and a remote controller 210 worn on by the user's hand 500. The HMD 100 is used for providing a XR environment (or XR scene) such as a virtual reality (VR) environment, an AR environment, or a mixed reality (MR) environment for the user.

After the HMD 100 detecting a specific gesture performed by the hand 500 on a plane (e.g., a desktop) 600, the HMD 100 switches a control mode of the HMD 100 (or the control mode of the XR scene) from another control mode (e.g., a keyboard mode) to a mouse mode. When the HMD 100 is in the mouse mode, a virtual mouse simulated by the hand 500 wearing the remote controller 210 is enabled. The user may interact with the XR scene provided by the HMD 100 by using the virtual mouse so as to update the XR scene. The updating of the XR scene may relate to an updating of a remote desktop or a data transmission between the HMD 100 and a cloud server.

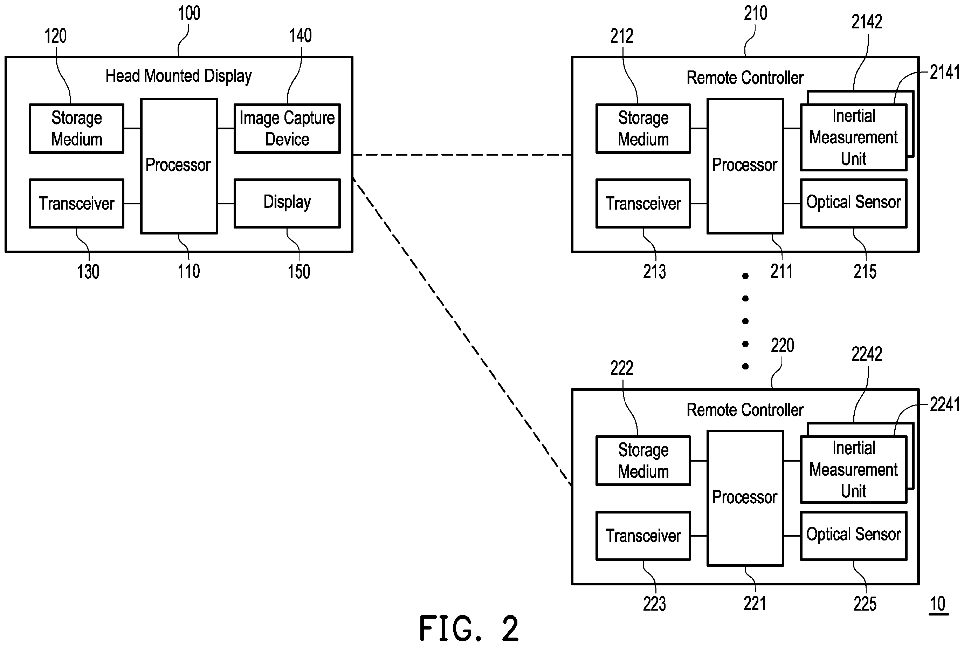

FIG. 2 illustrates a schematic diagram of the system 10 according to the one embodiment of the present invention. The system 100 includes the HMD 100 and one or more remote controllers communicatively connecting to the HMD 100. It is assumed that the one or more remote controllers include a remote controller 210 and a remote controller 220. However, the number of the one or more controller is not limited thereto.

The HMD 100 includes a processor 110, a storage medium 120, a transceiver 130, an image capture device 140, and a display 150. The processor 110 may be, for example, a central processing unit (CPU), or other programmable general purpose or special purpose micro control unit (MCU), a microprocessor, a digital signal processor (DSP), a programmable controller, an application specific integrated circuit (ASIC), a graphics unit (GPU), an arithmetic logic unit (ALU), a complex programmable logic device (CPLD), a field programmable gate array (FPGA),, or other similar device or a combination of the above devices. The processor 110 is coupled to the storage medium 120, the transceiver 130, the image capture device 140, and the display 150.

The storage medium 120 may be, for example, any type of fixed or removable random access memory (RAM), a read-only memory (ROM), a flash memory, a hard disk drive (HDD), a solid state drive (SSD) or similar element, or a combination thereof. The storage medium 120 may be a non-transitory computer readable storage medium configured to record a plurality of executable computer programs, modules, or applications to be loaded by the processor 110 to perform the function of the HMD 100.

The transceiver 130 is configured to transmit or receive wired/wireless signals. The transceiver 130 may also perform operations such as low noise amplifying, impedance matching, frequency mixing, up or down frequency conversion, filtering, amplifying, and so forth. The processor 110 may communicate with other devices (e.g., remote controller, cloud server, or remote desktop) via the transceiver 130.

The image capture device 140 may be, for example, a camera or a photographic device for capturing images. The image capture device 140 may include a complementary metal oxide semiconductor (CMOS) sensor or a charge-coupled device (CCD) sensor.

The display 150 may be used for displaying video data or image data such as an XR scene of the XR environment for the user wearing the HMD 100. The display 150 may include a liquid-crystal display (LCD) or an organic light-emitting diode (OLED) display. In one embodiment, the display 150 may provide an image beam to the eye of the user to form the image on the retina of the user such that the use may see an XR scene created by the HMD 100.

The remote controller 210 may be a ring-type device that can be worn on a finger (e.g., forefinger) of the user's hand 500. The remote controller 210 includes a processor 211, a storage medium 212, and a transceiver 213. The remote controller 210 further includes one or more inertial measurement units (IMUs) and may also include an optical sensor 215. It is assumed that the one or more IMUs include an IMU 2141 and an IMU 2142. However, the number of the one or more IMUs is not limited thereto.

The functions or structures of the processor 211 may be similar to the processor 110. The processor 211 is coupled to the storage medium 212, the transceiver 213, the IMU 2141, the IMU 2142, and the optical sensor 215.

The functions or structures of the storage medium 212 may be similar to the storage medium 120. The storage medium 212 may be a non-transitory computer readable storage medium configured to record a plurality of executable computer programs, modules, or applications to be loaded by the processor 211 to perform the function of the remote controller 210.

The functions or structures of the transceiver 213 may be similar to the transceiver 130. The processor 211 may communicate with other devices (e.g., HMD 100) via the transceiver 213.

The IMU 2141 (or IMU 2142) may include an accelerometer or a gyroscope. The optical sensor 215 may include a CMOS sensor or a CCD sensor.

The remote controller 220 may be a ring-type device that can be worn on a finger (e.g., middle finger) of the user's hand 500. The remote controller 220 includes a processor 221, a storage medium 222, and a transceiver 223. The remote controller 220 further includes one or more IMUs and may also include an optical sensor 225. It is assumed that the one or more IMUs include an IMU 2241 and an IMU 2242. However, the number of the one or more IMUs is not limited thereto.

The functions or structures of the processor 221 may be similar to the processor 211. The processor 221 is coupled to the storage medium 222, the transceiver 223, the IMU 2241, the IMU 2242, and the optical sensor 225.

The functions or structures of the storage medium 222 may be similar to the storage medium 212. The storage medium 222 may be a non-transitory computer readable storage medium configured to record a plurality of executable computer programs, modules, or applications to be loaded by the processor 221 to perform the function of the remote controller 220.

The functions or structures of the transceiver 223 may be similar to the transceiver 213. The processor 221 may communicate with other devices (e.g., HMD 100) via the transceiver 223.

The IMU 2241 (or IMU 2242) may be an accelerometer or a gyroscope. The optical sensor 225 may include a CMOS sensor or a CCD sensor.

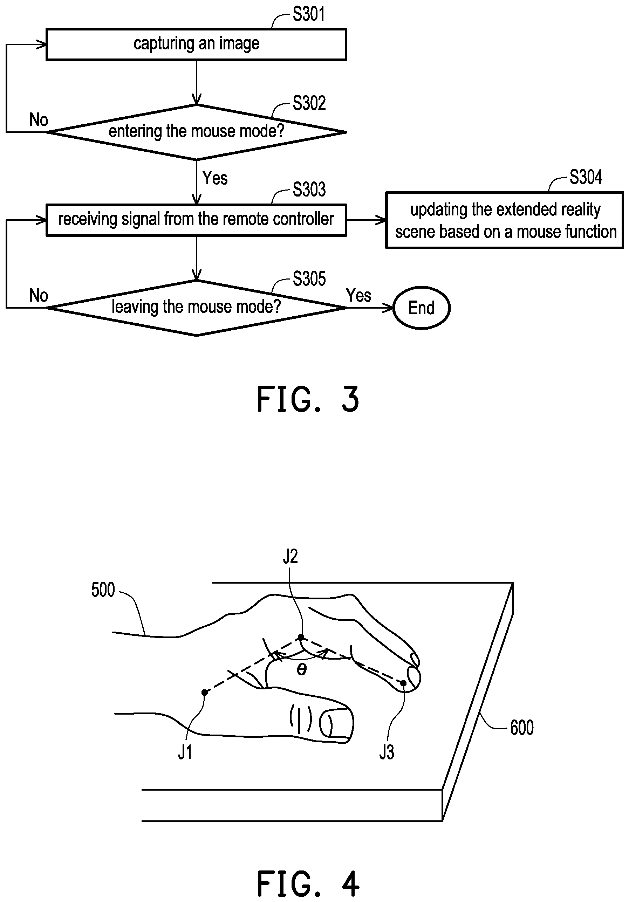

The HMD 100 is configured to detect a gesture of the user's hand 500 and to determine whether the control mode of the HMD 100 is switched to the mouse mode according to the detection result. FIG. 3 illustrates a method for detecting a control mode for the XR scene according to one embodiment of the present invention. In step S301, the HMD 100 captures an image including the user's hand 500 and the plane 600 through the image capture device 140.

In step S302, the HMD 100 determines whether the HMD 100 enters the mouse mode. That is, the HMD 100 determines whether the virtual mouse for interacting with the XR scene is enabled. If the HMD 100 has entered the mouse mode, the method proceeds to step S303. If the HMD has not entered the mouse mode, the method proceeds to step S301. When the HMD 100 enters the mouse mode, the HMD 100 enables the virtual mouse, such that the hand 500 wearing the remote controller 210 and/or remote controller 220 simulates the virtual mouse which can interact with the XR scene provided by the HMD 100.

The HMD 100 detects the image captured by the image capture device 140 to obtain data of the hand 500 and data of the plane 600 from the image. The HMD 100 determines whether the HMD 100 enters the mouse mode according to the data of the hand 500 and the data of the plane 600. In other words, the HMD 100 determines whether to enable the virtual mouse or not according to the data of the hand 500 and the data of the plane 600.

FIG. 4 illustrates a schematic diagram of a result of the hand tracking according to one embodiment of the present invention. The HMD 100 may perform a hand tracking algorithm on the captured image to obtain the data of the hand 500, wherein the data of the hand 500 may include a plurality of joints of the hand 500, such as joint J1, J2, and J3. In one embodiment, the joint J1, J2, and J3 may respectively represent a palm of the hand 500, a metacarpophalangeal joint (MCP) of the forefinger of the hand 500, and the distal interphalangeal joint (DIP) of the forefinger of the hand 500. The data of the hand 500 may further include positions of a joint (e.g., joint J1) of the hand 500. The HMD 100 may determine an angle formed by the plurality of joints according to the data of the hand 500 so as to detect a flexion of the hand 500. For example, the HMD 100 may determine an angle θ formed by the joints J1, J2, and 13, as shown in FIG. 4. On the other hand, the HMD 100 may perform an object detection algorithm on the captured image to obtain the data of the plane 600, wherein the data of the plane 600 may include a position of the plane 600. The HMD 100 may determine a distance between the joint J1 and the plane 600 according to the data of the hand 500 and the data of the plane 600. The HMD 100 may determine that the HMD 100 has entered the mouse mode according to the angle θ and/or the distance between the joint J1 and the plane 600.

In one embodiment, the HMD 100 may determine that the HMD 100 has entered the mouse mode if the angle θ is less than or equal to an angle threshold and/or the distance between the joint J1 and the plane 600 is less than or equal to a distance threshold, and determine that the HMD 100 has not entered the mouse mode if the angle θ is greater than the angle threshold and/or the distance between the joint J1 and the plane 600 is greater than the distance threshold.

For example, the angle threshold may be set to 160 degree. When the hand 500 is relaxed, the angle θ may be closed to 180 degree. Since the angle θ is greater than the angle threshold, the HMD 100 determines that no flexion of the hand 500 is detected. Accordingly, the HMD 100 determines that the HMD 100 has not entered the mouse mode. The HMD 100 may determine that the control mode of HMD 100 is switched to the keyboard mode, wherein the user may interact with the XR scene through a keyboard command received by the transceiver 130. On the other hand, when the hand 500 is bent, the angel θ may become less than the angle threshold (e.g., angel θ = 150 degree), and the HMD 100 determines that a flexion of the hand 500 is detected. Accordingly, the HMD 100 determines that the HMD 100 has entered the mouse mode. For example, the distance threshold may be set to 2 cm. When the hand 500 is put on the table, the distance between the joint J1 and the plane 600 may become less than or equal to the distance threshold. Accordingly, the HMD 100 determines that the HMD 100 has entered the mouse mode.

Referring to FIG. 3, after determining that the HMD 100 has entered the mouse mode, in step S303, the HMD 100 receives signals from the remote controller 210 and/or 220. In step S304, the HMD 100 may update the XR scene provided by the HMD 100 according to the signals from the remote controller 210 and/or 220 based on a mouse function of the enabled virtual mouse. The mouse function of the virtual mouse may include a move operation, a click operation (e.g., a single-click operation or a double-click operation), or a scroll operation (e.g., a scroll up operation or a scroll down operation).

In step S305, the HMD 100 determines whether the HMD 100 leaves the mouse mode. That is, the HMD 100 determines whether to disable the virtual mouse. If the HMD 100 has left the mouse mode, the procedure ends. If the HMD 100 has not left the mouse mode, the method proceeds to step S303.

The HMD 100 may determine that the HMD 100 has left the mouse mode according to the angle θ and/or the distance between the joint J1 and the plane 600. In one embodiment, the HMD 100 may determine that the HMD 100 has left the mouse mode if the angle θ is greater than an angle threshold and/or the distance between the joint J1 and the plane 600 is greater than a distance threshold, and determine that the HMD 100 has not left the mouse mode if the angle θ is less than or equal to the angle threshold and/or the distance between the joint J1 and the plane 600 is less than or equal to the distance threshold.

In step S305, the HMD 100 may switch the control mode from the mouse mode to another control mode (e.g., the keyboard mode). That is, the HMD 100 may disable the virtual mouse for interacting with the XR scene.

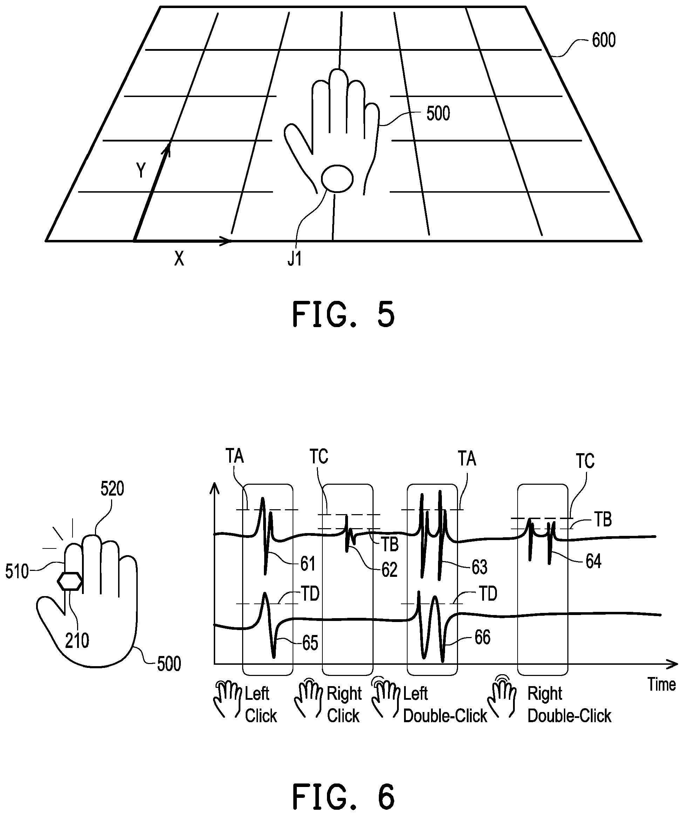

When the virtual mouse is enabled, the HMD 100 may move a cursor corresponding to the virtual mouse according to a hand tracking result for the hand 500. FIG. 5 illustrates a schematic diagram of performing a move operation of the virtual mouse by using hand tracking according to one embodiment of the present invention. The HMD 100 may perform hand tracking algorithm on the image captured by the image capture device 140 to obtain the data of the hand 500, wherein the data of the hand 500 may include positions of a joint J1 and time information corresponding to the positions, wherein the joint J1 may represent a palm of the hand 500. The accelerate or speed of the moving hand 500 may be derived by the HMD 100 according to the position of the joint and the time information. When the hand 500 put on the plane 600 is moving, the position of the hand 500 changes. Accordingly, the HMD 100 moves the cursor corresponding to the virtual mouse in the XR scene according to the position (or accelerate or speed) of the hand 500.

FIG. 6 illustrates a schematic diagram of performing a click operation by using one remote controller according to one embodiment of the present invention. When the virtual mouse is enabled, the user may perform a click operation in the XR scene by using one remote controller. It is assumed that the remote controller 210 is worn on the finger 510 (e.g., forefinger) of the hand 500 and no remote controller is worn on the finger 520 (e.g., middle finger) of the hand 500. If the finger 510 makes a click action, the HMD 100 receives signals from the IMU 2141 and/or IMU 2142, and the HMD 100 performs a click operation by the virtual mouse in the XR scene according to the received signals.

In one embodiment, the HMD 100 may perform a click operation associated with the finger 510 (i.e., a left click) wearing the remote controller 210 according to a signal measured by the IMU 2141, wherein the IMU 2141 may be an accelerometer or a gyroscope. For example, after the HMD 100 receiving signal 61 measured by the IMU 2141, the HMD 100 may detect the amplitude of the signal 61. The HMD 100 may perform the click operation associated with the finger 510 if the amplitude of the signal 61 is greater than a threshold TA. Otherwise, the HMD 100 may not perform the click operation associated with the finger 510.

In one embodiment, the HMD 100 may perform a click operation associated with the finger 520 (i.e., a right click) not wearing the remote controller 210 according to a signal measured by the IMU 2141, wherein the IMU 2141 may be an accelerometer (gyroscope may not detect any signal if the finger 510 wearing the remote controller 210 is not moving). For example, after the HMD 100 receiving signal 62 measured by the IMU 2141, the HMD 100 may detect the amplitude of the signal 62. The HMD 100 may perform the click operation associated with the finger 520 if the amplitude of the signal 62 is greater than a threshold TB but less than or equal to a threshold TC, wherein the threshold TB may be less than the threshold TC, and the threshold TC may be less than the threshold TA. Otherwise, the HMD 100 may not perform the click operation associated with the finger 520.

In one embodiment, the HMD 100 may perform a single-click operation or a double-click according to the number of the extreme values (e.g., wave peaks or wave valleys) of the signal measured by the IMU 2141. For example, the HMD 100 may perform a single-click operation associated with the finger 510 according to the signal 61 in response to the number of the extreme values of the signal 61 being equal to one. Otherwise, the HMD 100 may not perform the single-click operation associated with the finger 510. For another example, the HMD 100 may perform a single-click operation associated with the finger 520 according to the signal 62 in response to the number of the extreme values of the signal 62 being equal to one. Otherwise, the HMD 100 may not perform the single-click operation associated with the finger 520. For another example, the HMD 100 may perform a double-click operation associated with the finger 510 according to the signal 63 in response to the number of the extreme values of the signal 63 being equal to two. Otherwise, the HMD 100 may not perform the double-click operation associated with the finger 510. For another example, the HMD 100 may perform a double-click operation associated with the finger 520 according to the signal 64 in response to the number of the extreme values of the signal 64 being equal to two. Otherwise, the HMD 100 may not perform the double-click operation associated with the finger 520.

In one embodiment, the HMD 100 may perform a click operation associated with the finger 510 according to signals measured by the IMU 2141 and IMU 2142 respectively, wherein the IMU 2141 or IMU 2142 may be an accelerometer or a gyroscope. For example, after the HMD 100 receiving signal 61 measured by the IMU 2141 and signal 65 measured by the IMU 2142, the HMD 100 may detect the amplitude of the signal 61 and the amplitude of the signal 65. The HMD 100 may perform a single-click operation if the amplitude of the signal 61 is greater than a threshold TA and the amplitude of the signal 65 is greater than a threshold TD. Otherwise, the HMD 100 may not perform the single-click operation. For another example, after the HMD 100 receiving signal 63 measured by the IMU 2141 and signal 66 measured by the IMU 2142, the HMD 100 may detect the amplitude of the signal 63 and the amplitude of the signal 66. The HMD 100 may perform a double-click operation if the amplitude of the signal 63 is greater than a threshold TA and the amplitude of the signal 66 is greater than a threshold TD. Otherwise, the HMD 100 may not perform the double-click operation.

In one embodiment, the HMD 100 may pre-store a machine learning (ML) model in the storage medium 120. The HMD 100 may input the signal measured by the IMU 2141 and/or the signal measured by the IMU 2142 into the ML model to recognize a mouse operation (e.g., a click operation or a scroll operation) of the virtual mouse. The HMD 100 may update the XR scene according to the recognized mouse operation.

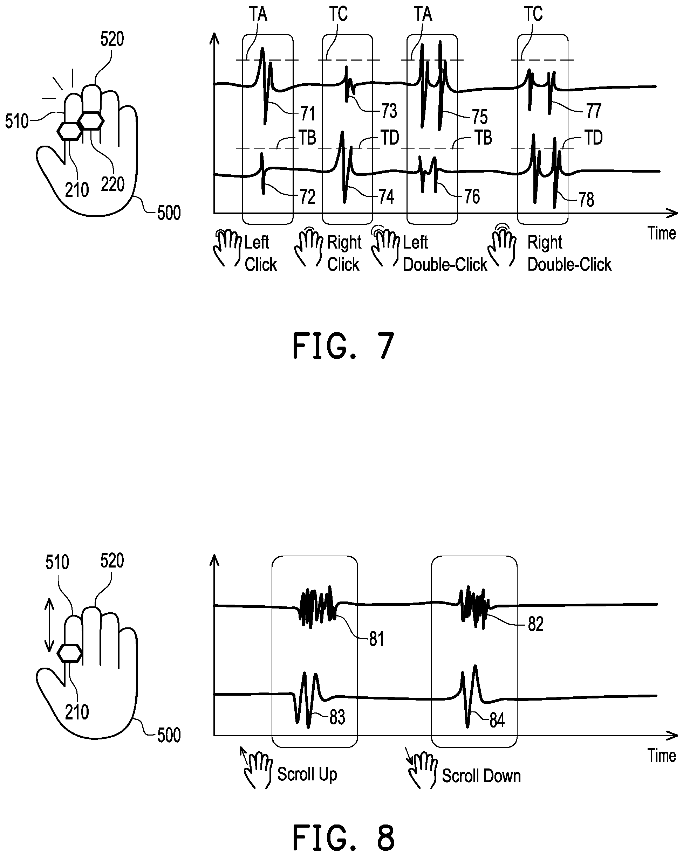

FIG. 7 illustrates a schematic diagram of performing a click operation by using multiple remote controllers according to one embodiment of the present invention. When the virtual mouse is enabled, the user may perform a click operation in the XR scene by using multiple remote controllers. It is assumed that the remote controller 210 is worn on the finger 510 (e.g., forefinger) of the hand 500 and the remote controller 220 is worn on the finger 520 (e.g., middle finger) of the hand 500. If the finger 510 or finger 520 makes a click action, the HMD 100 receives signals from the remote controller 210 (i.e., signals measured by IMU 2141 and/or IMU 2142) and signals from the remote controller 220 (i.e., signals measured by IMU 2241 and/or IMU 2242). The HMD 100 performs a click operation of the virtual mouse in the XR scene according to the received signals.

In one embodiment, the HMD 100 may perform a click operation associated with the finger 510 (i.e., a left click). For example, after the HMD 100 receiving signal 71 measured by the remote controller 210 and signal 72 measured by the remote controller 220, the HMD 100 may detect the amplitudes of the signal 71 and signal 72. The HMD 100 may perform the click operation associated with the finger 510 if the amplitude of the signal 71 is greater than a threshold TA and the amplitude of the signal 72 is less than or equal to a threshold TB. Otherwise, the HMD 100 may not perform the click operation associated with the finger 510.

In one embodiment, the HMD 100 may perform a click operation associated with the finger 520 (i.e., a right click). For example, after the HMD 100 receiving signal 73 measured by the remote controller 210 and signal 74 measured by the remote controller 220, the HMD 100 may detect the amplitudes of the signal 73 and signal 74. The HMD 100 may perform the click operation associated with the finger 520 if the amplitude of the signal 73 is less than or equal to a threshold TC and the amplitude of the signal 74 is greater than a threshold TD, wherein the threshold TC and the threshold TD may be less than or equal to the threshold TA and the threshold TB respectively. Otherwise, the HMD 100 may not perform the click operation associated with the finger 520.

In one embodiment, the HMD 100 may perform a single-click operation or a double-click operation according to the number of the extreme values of the signal measured by the remote controller 210 and the number of the extreme values of the signal measured by the remote controller 220. For example, the HMD 100 may perform a single-click operation associated with the finger 510 in response to the number of the extreme values of the signal 71 being equal to one and the number of the extreme values of the signal 72 being equal to one. Otherwise, the HMD 100 may not perform the single-click operation associated with the finger 510. For another example, the HMD 100 may perform a single-click operation associated with the finger 520 in response to the number of the extreme values of the signal 73 being equal to one and the number of the extreme values of the signal 74 being equal to one. Otherwise, the HMD 100 may not perform the single-click operation associated with the finger 520. For another example, the HMD 100 may perform a double-click operation associated with the finger 510 in response to the number of the extreme values of the signal 75 being equal to two and the number of the extreme values of the signal 76 being equal to two. Otherwise, the HMD 100 may not perform the double-click operation associated with the finger 510. For another example, the HMD 100 may perform a double-click operation associated with the finger 520 in response to the number of the extreme values of the signal 77 being equal to two and the number of the extreme values of the signal 78 being equal to two. Otherwise, the HMD 100 may not perform the double-click operation associated with the finger 520.

In one embodiment, the HMD 100 may pre-store a ML model in the storage medium 120. The HMD 100 may input the signal measured by the remote controller 210 and/or the signal measured by the remote controller 220 into the ML model to recognize a mouse operation (e.g., a click operation or a scroll operation) of the virtual mouse. The HMD 100 may update the XR scene according to the recognized mouse operation.

FIG. 8 illustrates a schematic diagram of performing a scroll operation by using a remote controller according to one embodiment of the present invention. When the virtual mouse is enabled, the user may perform a scroll operation in the XR scene by using a remote controller. It is assumed that the remote controller 210 is worn on the finger 510 of the hand 500. If the finger 510 makes a scroll action, the HMD 100 receives signals from the IMU 2141 and/or IMU 2142, and the HMD 100 performs a scroll operation of the virtual mouse in the XR scene according to the received signals.

In one embodiment, the HMD 100 detects a wave peak and a wave valley of the signal measured by the IMU 2141. If a time point of the occurring of the wave peak (the first wave peak of the signal) is later than a time point of the occurring of the wave valley (the first wave valley of the signal), the HMD 100 performs a first scroll operation of the virtual mouse in the XR scene. If the time point of the occurring of the wave peak is earlier than the time point of the occurring of the wave valley, the HMD 100 performs a second scroll operation of the virtual mouse in the XR scene, wherein the second scroll operation is different from the first scroll operation. For example, the HMD 100 may perform a scroll up operation in the XR scene in response to the time point of the wave peak of the signal 81 being later than the time point of the wave valley of the signal 81. Otherwise, the HMD 100 may not perform the scroll up operation. In another example, the HMD 100 may perform a scroll down operation in the XR scene in response to the time point of the wave peak of the signal 82 being earlier than the time point of the wave valley of the signal 82. Otherwise, the HMD 100 may not perform the scroll down operation.

In one embodiment, the HMD 100 detects wave peaks and wave valleys of the signals measured by the IMU 2141 and IMU 2142. If a time point of the occurring of the wave peak (e.g., the first wave peak of the signal) of the signal measured by the IMU 2141 is later than a time point of the occurring of the wave valley (e.g., the first wave valley of the signal) of the signal measured by the IMU 2141, and a time point of the occurring of the wave peak (e.g., the first wave peak of the signal) of the signal measured by the IMU 2142 is later than a time point of the occurring of the wave valley (e.g., the first wave valley of the signal) of the signal measured by the IMU 2142, the HMD 100 performs a first scroll operation of the mouse function in the XR scene. If a time point of the occurring of the wave peak (e.g., the first wave peak of the signal) of the signal measured by the IMU 2141 is earlier than a time point of the occurring of the wave valley (e.g., the first wave valley of the signal) of the signal measured by the IMU 2141, and a time point of the occurring of the wave peak (e.g., the first wave peak of the signal) of the signal measured by the IMU 2142 is earlier than a time point of the occurring of the wave valley (e.g., the first wave valley of the signal) of the signal measured by the IMU 2142, the HMD 100 performs a second scroll operation of the moues function in the XR scene, wherein the second scroll operation is different from the first scroll operation.

For example, the HMD 100 may perform a scroll up operation in the XR scene in response to the time point of the wave peak of the signal 81 being later than the time point of the wave valley of the signal 81 and the time point of the wave peak of the signal 82 being later than the time point of the wave valley of the signal 82. Otherwise, the HMD 100 may not perform the scroll up operation. For another example, the HMD 100 may perform a scroll down operation in the XR scene in response to the time point of the wave peak of the signal 83 being earlier than the time point of the wave valley of the signal 83 and the time point of the wave peak of the signal 84 being earlier than the time point of the wave valley of the signal 84. Otherwise, the HMD 100 may not perform the scroll down operation.

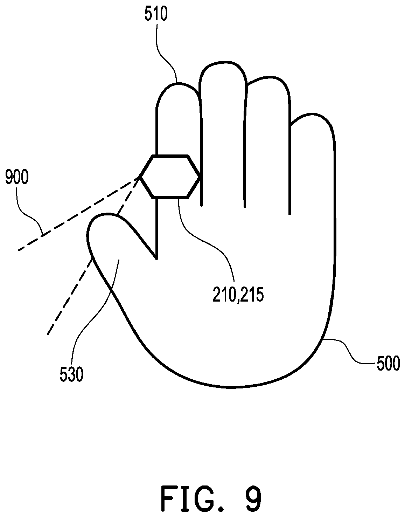

FIG. 9 illustrates a schematic diagram of a remote controller 210 with an optical sensor 215 according to one embodiment of the present invention. It is assumed that the remote controller 210 is worn on finger 510 (e.g., forefinger) of the hand 500. The optical sensor 215 may have a detection area 900 directed to finger 530 (e.g., thumb) of the hand 500, and the optical sensor 215 may generate a signal according to the detection area 900. The remote controller 210 may transmit the signal generated by the optical sensor 215 to the HMD 100.

In one embodiment, the HMD 100 may determine whether an object (e.g., finger 530) has moved toward the optical sensor 215 according to the signal generated by the optical sensor 215. For example, if the optical sensor 215 has been touched or clicked by the finger 530, the HMD 100 may determine that an object has moved toward the optical sensor 215 according to the signal. Accordingly, the HMD 100 may perform a click operation of the virtual mouse in the XR scene. Otherwise, the HMD 100 may not perform the click operation of the virtual mouse in the XR scene.

In one embodiment, the HMD 100 may determine whether an object (e.g., finger 530) has moved across the detection area 900 according to the signal generated by the optical sensor 215. If the object has moved across the detection area 900 in a specific direction, the HMD 100 may perform a scroll operation of the virtual mouse in the XR scene according to the specific direction. Specifically, the HMD 100 may perform a first scroll operation of the virtual mouse in the XR scene in response to the object having moved across the detection area 900 in a first direction, and the HMD 100 may perform a second scroll operation of the virtual mouse in the XR scene in response to the object having moved across the detection area 900 in a second direction opposite to the first direction, wherein the first scroll operation (e.g., a scroll up operation) is different from the second scroll operation (e.g., a scroll down operation).

In one embodiment, the HMD 100 may pre-store a ML model in the storage medium 120. The HMD 100 may input the signal measured by the optical sensor 215 and/or signal measured by the optical sensor 225 into the ML model to recognize a mouse operation (e.g., a click operation or a scroll operation) of the virtual mouse. The HMD 100 may update the XR scene according to the recognized mouse operation.

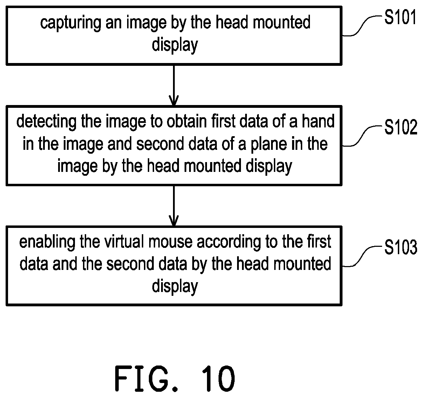

FIG. 10 illustrates a flowchart of a method for remotely controlling extended reality by a virtual mouse according to one embodiment of the present invention, wherein the method may be implemented by the system 10 as shown in FIG. 2. In step S101, capturing an image by the head mounted display. In step S102, detecting the image to obtain first data of a hand in the image and second data of a plane in the image by the head mounted display. In step S103, enabling the virtual mouse according to the first data and the second data by the head mounted display.

In summary, the HMD of the present invention may detect the gesture of the user to determine whether the user wants to enable a virtual mouse function for interacting with the XR scene. If the HMD detects a flexion of the user's hand, the HMD may determine that the user wants to enable the virtual mouse function. After the virtual mouse function being enabled, the user's hand wearing one or more ring-type remote controllers can be simulated as a mouse. The HMD receives the signal transmitted from the remote controller and determines whether a click operation or a scroll operation corresponding to the virtual mouse is performed by the user, and thus the HMD interacts with the XR scene according to the signal. Accordingly, the present invention provides a convenient and intuitive way for the user of an HMD to interact with the XR environment.

It will be apparent to those skilled in the art that various modifications and variations can be made to the disclosed embodiments without departing from the scope of the following claims.

## Claims

1. A system (10) for remotely controlling extended reality by a virtual mouse, comprising:
a head mounted display (100), comprising an image capture device (140); and
a first remote controller (210) for being worn on a hand (500), wherein the first remote controller (210) communicatively connects to the head mounted display (100), wherein the first remote controller (210) comprises a first inertial measurement unit (2141),
wherein the head mounted display (100) is configured to:
capture (S101, S301) an image through the image capture device (140);
detect (S102) the image to obtain first data of the hand (500) in the image and second data of a plane (600) in the image;
enable (S103) the virtual mouse according to the first data and the second data;
receive (S303) a first signal (61-64; 71, 73, 75, 77, 78; 81, 82) generated by the first inertial measurement unit (2141);
perform a click operation by the virtual mouse in an extended reality scene according to the first signal (61-64; 71, 73, 75, 77, 78; 81, 82);
detect a first occurring wave peak and a first occurring wave valley of the first signal (61-64; 71, 73, 75, 77, 78; 81, 82);
in response to a first time point of the first wave peak being later than a second time point of the first wave valley, perform a first scroll operation by the virtual mouse in an extended reality scene; and
in response to the first time point of the first wave peak being earlier than the second time point of the first wave valley, perform a second scroll operation by the virtual mouse in the extended reality scene.

2. The system of claim 1, wherein the first data comprises a first joint (J1) of the hand (500), and the head mounted display (100) is further configured to:
determine whether a distance between the first joint (J1) and the plane (600) is less than or equal to a distance threshold according to the first data and the second data; and
in response to the distance being less than or equal to the distance threshold, enable the virtual mouse.

3. The system of claim 2, wherein the first data comprises a plurality of joints (J1, J2, J3) of the hand (500) including the first joint (J1), and the head mounted display (100) is further configured to:
determine whether an angle (Θ) formed by the plurality of joints (J1, J2, J3) is less than or equal to an angle threshold; and
in response to the angle (Θ) being less than or equal the angle threshold, enable the virtual mouse.

4. The system of claim 3, wherein the head mounted display (100) is further configured to:
identify the plurality of joints (J1, J2, J3) by performing a hand tracking algorithm on the image to obtain the first data, wherein the first joint (J1) in the plurality of joints represents a palm of the hand (500).

5. The system of claim 1, wherein the head mounted display (100) is further configured to:
obtain a position of a palm of the hand (500) by performing a hand tracking algorithm on the image; and
move a cursor corresponding to the virtual mouse in an extended reality scene according to the position.

6. The system of claim 1, wherein the head mounted display (100) is further configured to:
detect a number of at least one local extreme value of the first signal (61-64; 71, 73, 75, 77); and
determine the click operation is one of a single-click operation and a double-click operation according to the number.

7. The system of claim 1, wherein the head mounted display (100) is further configured to:
detect an amplitude of the first signal (61-64; 71, 73, 75, 77); and
in response to the amplitude being greater than a first threshold (TA), perform the click operation associated with a first finger (510) of the hand (500) wearing the first remote controller (210, 220).

8. The system of claim 1, wherein the first remote controller (210) further comprises a second inertial measurement unit (2142),
wherein the head mounted display (100) is further configured to:
receive a second signal (65, 66; 72, 74, 76, 78) generated by the second inertial measurement unit (2142); and
perform the click operation according to the first signal (61) and the second signal (65).

9. The system of claim 1, wherein the first remote controller (210) is for being worn on a first finger (510) of the hand (500), and the system further comprising:
a second remote controller (220) for being worn on a second finger (220) of the hand (500), wherein the second remote controller (220) comprises a second inertial measurement unit (2142) and communicatively connects to the head mounted display (100), wherein the head mounted display (100) is further configured to:
receive a second signal (72, 74, 76, 78) generated by the second inertial measurement unit (2142); and
perform the click operation according to the first signal (71, 73, 75, 77) and the second signal (72, 74, 76, 78).

10. The system of claim 1, wherein the first remote controller (210) is for being worn on a first finger (510) of the hand (500), the first remote controller (210) comprising:
an optical sensor (215) with a detection area (900) directed to a second finger (530) of the hand (500), wherein the optical sensor (215) generates the first signal (61-64; 71, 73, 75, 77, 78; 81, 82) according to the detection area (900).

11. The system of claim 10, wherein the head mounted display (100) is further configured to:
determine whether an object has moved toward the optical sensor (215) according to the first signal (61-64; 71, 73, 75, 77, 78; 81, 82); and
in response to determining the object has moved toward the optical sensor (215), perform a click operation by the virtual mouse in an extended reality scene.

12. The system of claim 10, wherein the head mounted display (100) is further configured to:
determine whether an object has moved across the detection area (900) according to the first signal (61-64; 71, 73, 75, 77, 78; 81, 82); and
in response to determining the object has moved across the detection area (900), perform a scroll operation by the virtual mouse in an extended reality scene.

13. A method for remotely controlling extended reality by a virtual mouse, suitable for a system (10) comprising a head mounted display (100) and a first remote controller (210) for being worn on a hand (500), wherein the method comprises:
capturing (S101, 5301) an image by the head mounted display (100);
detecting (S102) the image to obtain first data of the hand (500) in the image and second data of a plane (600) in the image by the head mounted display (100);
enabling (S103) the virtual mouse according to the first data and the second data by the head mounted display (100);
receiving (S303) a first signal (61-64; 71, 73, 75, 77, 78; 81, 82) generated by a first inertial measurement unit (2141) of the first remote controller (210) by the head mounted display (100);
performing a click operation by the virtual mouse in an extended reality scene according to the first signal (61-64; 71, 73, 75, 77, 78; 81, 82);
detecting a first occurring wave peak and a first occurring wave valley of the first signal (61-64; 71, 73, 75, 77, 78; 81, 82);
in response to a first time point of the first wave peak being later than a second time point of the first wave valley, performing a first scroll operation by the virtual mouse in an extended reality scene; and
in response to the first time point of the first wave peak being earlier than the second time point of the first wave valley, performing a second scroll operation by the virtual mouse in the extended reality scene.

14. The method of claim 13, wherein the first data comprises a first joint (J1) of the hand (500), and the method further comprises:
determining whether a distance between the first joint (J1) and the plane (600) is less than or equal to a distance threshold according to the first data and the second data by the head mounted device (100); and
in response to the distance being less than or equal to the distance threshold, enabling the virtual mouse by the head mounted device (100).

15. The method of claim 14, wherein the first data comprises a plurality of joints (J1, J2, J3) of the hand (500) including the first joint (J1), and the method further comprises:
determining whether an angle (Θ) formed by the plurality of joints (J1, J2, J3) is less than or equal to an angle threshold by the head mounted device (100); and
in response to the angle (Θ) being less than or equal the angle threshold, enabling the virtual mouse by the head mounted device (100).

## Patentansprüche

1. Ein System (10) zur Fernsteuerung von erweiterter Realität durch eine virtuelle Maus, umfassend:
eine am Kopf montierte Anzeige (100), die eine Bilderfassungsvorrichtung (140) umfasst; und
eine erste Fernsteuerung (210), die an einer Hand (500) getragen wird, wobei die erste Fernsteuerung (210) kommunikativ mit der am Kopf getragenen Anzeige (100) verbunden ist, wobei die erste Fernsteuerung (210) eine erste Trägheitsmesseinheit (2141) umfasst,
wobei die am Kopf montierte Anzeige (100) konfiguriert ist zum:
Aufnehmen (S101, S301) eines Bildes durch die Bildaufnahmevorrichtung (140);
Erfassen (S102) des Bildes, um erste Daten der Hand (500) im Bild und zweite Daten einer Ebene (600) im Bild zu erhalten;
Aktivieren (S103) der virtuellen Maus entsprechend den ersten und zweiten Daten;
Empfangen (S303) eines ersten Signals (61-64; 71, 73, 75, 77, 78; 81, 82), das von der ersten Trägheitsmesseinheit (2141) erzeugt wird;
Durchführen eines Klickvorgangs mit der virtuellen Maus in einer Szene der erweiterten Realität entsprechend dem ersten Signal (61-64; 71, 73, 75, 77, 78; 81, 82);
Erfassen einer ersten auftretenden Wellenspitze und eines ersten auftretenden Wellentals des ersten Signals (61-64; 71, 73, 75, 77, 78; 81, 82);
Durchführen einer ersten Bildlaufoperation durch die virtuelle Maus in einer Szene der erweiterten Realität als Reaktion darauf, dass ein erster Zeitpunkt des ersten Wellenbergs später ist als ein zweiter Zeitpunkt des ersten Wellentals; und
Durchführen einer zweiten Bildlaufoperation durch die virtuelle Maus in der Szene der erweiterten Realität als Reaktion darauf, dass der erste Zeitpunkt des ersten Wellenbergs vor dem zweiten Zeitpunkt des ersten Wellentals liegt.

2. System nach Anspruch 1, wobei die ersten Daten ein erstes Gelenk (J1) der Hand (500) umfassen, und die am Kopf montierte Anzeige (100) ferner konfiguriert ist zum:
Bestimmen, ob ein Abstand zwischen dem ersten Gelenk (J1) und der Ebene (600) kleiner oder gleich einem Abstandsschwellenwert ist, und zwar gemäß den ersten Daten und den zweiten Daten; und
Aktivieren der virtuellen Maus als Reaktion darauf, dass der Abstand kleiner oder gleich dem Abstandsschwellenwert ist.

3. System nach Anspruch 2, wobei die ersten Daten eine Vielzahl von Gelenken (J1, J2, J3) der Hand (500) einschließlich des ersten Gelenks (J1) umfassen, und die am Kopf montierte Anzeige (100) ferner konfiguriert ist zum:
Bestimmen, ob ein von den mehreren Gelenken (J1, J2, J3) gebildeter Winkel (Θ) kleiner oder gleich einem Winkelschwellenwert ist; und
Aktivieren der virtuellen Maus als Reaktion darauf, dass der Winkel (θ) kleiner oder gleich dem Winkelschwellenwert ist.

4. Das System nach Anspruch 3, wobei die am Kopf montierte Anzeige (100) ferner konfiguriert ist zum:
Identifizieren der Vielzahl von Gelenken (J1, J2, J3) durch Ausführen eines Handverfolgungsalgorithmus auf dem Bild, um die ersten Daten zu erhalten, wobei das erste Gelenk (J1) in der Vielzahl von Gelenken eine Handfläche der Hand (500) darstellt.

5. Das System nach Anspruch 1, wobei die am Kopf montierte Anzeige (100) ferner konfiguriert ist zum:
Erhalten einer Position einer Handfläche der Hand (500) durch Ausführen eines Handverfolgungsalgorithmus auf dem Bild; und
Bewegen eines der virtuellen Maus entsprechenden Cursors in einer Szene der erweiterten Realität entsprechend der Position.

6. Das System nach Anspruch 1, wobei die am Kopf montierte Anzeige (100) ferner konfiguriert ist zum:
Erfassen einer Anzahl von mindestens einem lokalen Extremwert des ersten Signals (61-64; 71, 73, 75, 77); und
Bestimmen, ob es sich bei dem Klickvorgang um einen Einfachklick oder einen Doppelklick handelt, je nach der Zahl.

7. Das System nach Anspruch 1, wobei die am Kopf montierte Anzeige (100) ferner konfiguriert ist zum:
Erfassen einer Amplitude des ersten Signals (61-64; 71, 73, 75, 77); und
Durchführen des Klickvorgangs als Reaktion darauf, dass die Amplitude größer als ein erster Schwellenwert (TA) ist, wobei der Klickvorgang einem ersten Finger (510) der Hand (500), die die erste Fernsteuerung (210, 220) trägt, zugeordnet ist.

8. System nach Anspruch 1, wobei die erste Fernsteuerung (210) ferner eine zweite Trägheitsmesseinheit (2142) umfasst,
wobei die am Kopf montierte Anzeige (100) ferner konfiguriert ist zum:
Empfangen eines zweiten Signals (65, 66; 72, 74, 76, 78), das von der zweiten Trägheitsmesseinheit (2142) erzeugt wird; und
Durchführen des Klickvorgangs gemäß dem ersten Signal (61) und dem zweiten Signal (65).

9. System nach Anspruch 1, wobei die erste Fernsteuerung (210) dazu bestimmt ist, an einem ersten Finger (510) der Hand (500) getragen zu werden, und wobei das System ferner umfasst:
eine zweite Fernsteuerung (220) zum Tragen an einem zweiten Finger (220) der Hand (500), wobei die zweite Fernsteuerung (220) eine zweite Trägheitsmesseinheit (2142) umfasst und kommunikativ mit der am Kopf montierten Anzeige (100) verbunden ist, wobei die am Kopf montierte Anzeige (100) ferner konfiguriert ist zum:
Empfangen eines zweiten Signals (72, 74, 76, 78), das von der zweiten Trägheitsmesseinheit (2142) erzeugt wird; und
Durchführen des Klickvorgangs entsprechend dem ersten Signal (71, 73, 75, 77) und dem zweiten Signal (72, 74, 76, 78).

10. System nach Anspruch 1, wobei die erste Fernsteuerung (210) dazu bestimmt ist, an einem ersten Finger (510) der Hand (500) getragen zu werden, wobei die erste Fernsteuerung (210) umfasst:
einen optischen Sensor (215) mit einem Erfassungsbereich (900), der auf einen zweiten Finger (530) der Hand (500) gerichtet ist, wobei der optische Sensor (215) das erste Signal (61-64; 71, 73, 75, 77, 78; 81, 82) in Abhängigkeit von dem Erfassungsbereich (900) erzeugt.

11. Das System nach Anspruch 10, wobei die am Kopf montierte Anzeige (100) ferner konfiguriert ist zum:
Bestimmen, ob sich ein Objekt in Richtung des optischen Sensors (215) bewegt hat, entsprechend dem ersten Signal (61-64; 71, 73, 75, 77, 78; 81, 82); und
Durchführen eines Klickvorgangs durch die virtuelle Maus in einer Szene der erweiterten Realität als Reaktion auf die Feststellung, dass sich das Objekt in Richtung des optischen Sensors (215) bewegt hat.

12. Das System nach Anspruch 10, wobei die am Kopf montierte Anzeige (100) ferner konfiguriert ist zum:
Bestimmen, ob sich ein Objekt durch den Erfassungsbereich (900) bewegt hat, entsprechend dem ersten Signal (61-64; 71, 73, 75, 77, 78; 81, 82); und
Durchführen einer Bildlaufoperation mit der virtuellen Maus in einer Szene der erweiterten Realität als Reaktion auf die Feststellung, dass sich das Objekt durch den Erfassungsbereich (900) bewegt hat.

13. Verfahren zur Fernsteuerung von erweiterter Realität durch eine virtuelle Maus, wobei das Verfahren für ein System (10) geeignet ist, das eine am Kopf montierte Anzeige (100) und eine erste Fernsteuerung (210) umfasst, wobei die erste Fernsteuerung (210) an einer Hand (500) getragen wird, wobei das Verfahren umfasst:
Aufnehmen (S101, S301) eines Bildes durch die am Kopf montierte Anzeige (100);
Erfassen (S102) des Bildes, um erste Daten der Hand (500) in dem Bild und zweite Daten einer Ebene (600) in dem Bild durch die am Kopf montierte Anzeige (100) zu erhalten;
Aktivieren (S103) der virtuellen Maus entsprechend den ersten Daten und den zweiten Daten durch die am Kopf montierte Anzeige (100);
Empfangen (S303) eines ersten Signals (61-64; 71, 73, 75, 77, 78; 81, 82), das von einer ersten Trägheitsmesseinheit (2141) der ersten Fernsteuerung (210) erzeugt wird, durch die am Kopf montierte Anzeige (100);
Durchführung eines Klickvorgangs durch die virtuelle Maus in einer Szene der erweiterten Realität entsprechend dem ersten Signal (61-64; 71, 73, 75, 77, 78; 81, 82);
Erfassen eines ersten auftretenden Wellenbergs und eines ersten auftretenden Wellentals des ersten Signals (61-64; 71, 73, 75, 77, 78; 81, 82);
Durchführen einer ersten Bildlaufoperation durch die virtuelle Maus in einer Szene der erweiterten Realität als Reaktion darauf, dass ein erster Zeitpunkt des ersten Wellenbergs später ist als ein zweiter Zeitpunkt des ersten Wellentals,; und
Durchführen einer zweiten Bildlaufoperation mit der virtuellen Maus in der Szene der erweiterten Realität als Reaktion darauf, dass der erste Zeitpunkt des ersten Wellenbergs vor dem zweiten Zeitpunkt des ersten Wellentals liegt,.

14. Verfahren nach Anspruch 13, wobei die ersten Daten ein erstes Gelenk (J1) der Hand (500) umfassen, und das Verfahren ferner umfasst:
Bestimmen, ob ein Abstand zwischen dem ersten Gelenk (J1) und der Ebene (600) kleiner oder gleich einem Abstandsschwellenwert, und zwar gemäß den ersten Daten und den zweiten Daten, und zwar durch die am Kopf montierte Vorrichtung (100); und
Aktivieren der virtuellen Maus durch die am Kopf befestigte Vorrichtung (100) als Reaktion darauf, dass der Abstand kleiner oder gleich dem Abstandsschwellenwert ist,.

15. Verfahren nach Anspruch 14, wobei die ersten Daten eine Vielzahl von Gelenken (J1, J2, J3) der Hand (500) einschließlich des ersten Gelenks (J1) umfassen, und das Verfahren ferner umfasst:
Bestimmen, ob ein Winkel (θ), der durch die mehreren Gelenke (J1, J2, J3) gebildet wird, kleiner oder gleich einem Winkelschwellenwert ist, und zwar durch die am Kopf montierte Vorrichtung (100); und
Aktivieren der virtuellen Maus durch die am Kopf befestigte Vorrichtung (100) als Reaktion darauf, dass der Winkel (θ) kleiner oder gleich dem Winkelschwellenwert ist,.

## Revendications

1. Système (10) permettant de contrôler à distance la réalité étendue à l'aide d'une souris virtuelle, comprenant :
un affichage monté sur la tête (100), comprenant un dispositif de capture d'images (140) ; et
une première télécommande (210) destinée à être portée sur une main (500), dans laquelle la première télécommande (210) se connecte de manière communicative à l'affichage monté sur la tête (100), dans laquelle la première télécommande (210) comprend une première unité de mesure inertielle (2141),
dans lequel l'affichage monté sur la tête (100) est configuré pour :
capturer (S101, S301) une image par l'intermédiaire du dispositif de capture d'image (140) ;
détecter (S102) l'image pour obtenir les premières données de la main (500) dans l'image et les secondes données d'un plan (600) dans l'image ;
activer (S103) la souris virtuelle en fonction des premières et des secondes données ;
recevoir (S303) un premier signal (61-64 ; 71, 73, 75, 77, 78 ; 81, 82) généré par la première unité de mesure inertielle (2141) ;
effectuer un clic avec la souris virtuelle dans une scène de réalité étendue en fonction du premier signal (61-64 ; 71, 73, 75, 77, 78 ; 81, 82) ;
détecter une première crête d'onde et une première vallée d'onde du premier signal (61-64 ; 71, 73, 75, 77, 78 ; 81, 82) ;
en réponse à un premier point temporel du premier crête d'onde plus tardif qu'un second point temporel de la première vallée d'onde, effectuer une première opération de défilement à l'aide de la souris virtuelle dans une scène de réalité étendue ; et
en réponse au premier point temporel du premier crête d'onde qui est antérieur au deuxième point temporel de la première vallée d'onde, effectuer une deuxième opération de défilement à l'aide de la souris virtuelle dans la scène de réalité étendue.

2. Le système de la revendication 1, dans lequel les premières données comprennent une première articulation (J1) de la main (500), et l'affichage monté sur la tête (100) est en outre configuré pour :
déterminer si une distance entre la première articulation (J1) et le plan (600) est inférieure ou égale à un seuil de distance en fonction des premières données et des secondes données ; et
activer la souris virtuelle lorsque la distance est inférieure ou égale au seuil de distance.

3. Le système de la revendication 2, dans lequel les premières données comprennent une pluralité d'articulations (J1, J2, J3) de la main (500), y compris la première articulation (J1), et l'affichage monté sur la tête (100) est en outre configuré pour :
déterminer si un angle (θ) formé par la pluralité d'articulations (J1, J2, J3) est inférieur ou égal à un seuil d'angle ; et
en réponse à l'angle (θ) étant inférieur ou égal au seuil d'angle, activer la souris virtuelle.

4. Le système de la revendication 3, dans lequel l'affichage monté sur la tête (100) est en outre configuré pour :
identifier la pluralité d'articulations (J1, J2, J3) en exécutant un algorithme de suivi de la main sur l'image pour obtenir les premières données, la première articulation (J1) de la pluralité d'articulations représentant la paume de la main (500).

5. Le système de la revendication 1, dans lequel l'affichage monté sur la tête (100) est en outre configuré pour :
obtenir une position de la paume de la main (500) en exécutant un algorithme de suivi de la main sur l'image ; et
déplacer un curseur correspondant à la souris virtuelle dans une scène de réalité étendue en fonction de la position.

6. Le système de la revendication 1, dans lequel l'affichage monté sur la tête (100) est en outre configuré pour :
détecter un nombre d'au moins une valeur extrême locale du premier signal (61-64 ; 71, 73, 75, 77) ; et
déterminer que l'opération de clic est l'une des opérations de simple clic et de double clic en fonction du nombre.

7. Le système de la revendication 1, dans lequel l'affichage monté sur la tête (100) est en outre configuré pour :
détecter une amplitude du premier signal (61-64 ; 71, 73, 75, 77) ; et
en réponse à l'amplitude supérieure à un premier seuil (TA), effectuer l'opération de clic associée à un premier doigt (510) de la main (500) portant la première télécommande (210, 220).

8. Le système de la revendication 1, dans lequel le premier contrôleur à distance (210) comprend en outre une deuxième unité de mesure inertielle (2142),
dans lequel l'affichage monté sur la tête (100) est en outre configuré pour :
recevoir un second signal (65, 66 ; 72, 74, 76, 78) généré par la seconde unité de mesure inertielle (2142) ; et
effectuer l'opération de clic en fonction du premier signal (61) et du second signal (65).

9. Le système de la revendication 1, dans lequel la première télécommande (210) est destinée à être portée sur un premier doigt (510) de la main (500), et le système comprend en outre :
une deuxième télécommande (220) destinée à être portée sur un deuxième doigt (220) de la main (500), dans laquelle la deuxième télécommande (220) comprend une deuxième unité de mesure inertielle (2142) et se connecte de manière communicative à l'affichage monté sur la tête (100), dans laquelle l'affichage monté sur la tête (100) est en outre configuré pour :
recevoir un deuxième signal (72, 74, 76, 78) généré par la deuxième unité de mesure inertielle (2142) ; et
effectuer l'opération de clic en fonction du premier signal (71, 73, 75, 77) et du deuxième signal (72, 74, 76, 78).

10. Le système de la revendication 1, dans lequel la première télécommande (210) est destinée à être portée sur un premier doigt (510) de la main (500), la première télécommande (210) comprenant :
un capteur optique (215) avec une zone de détection (900) dirigée vers un deuxième doigt (530) de la main (500), le capteur optique (215) générant le premier signal (61-64 ; 71, 73, 75, 77, 78 ; 81, 82) en fonction de la zone de détection (900).

11. Le système de la revendication 10, dans lequel l'affichage monté sur la tête (100) est en outre configuré pour :
déterminer si un objet s'est déplacé vers le capteur optique (215) en fonction du premier signal (61-64 ; 71, 73, 75, 77, 78 ; 81, 82) ; et
en réponse à la détermination que l'objet s'est déplacé vers le capteur optique (215), effectuer une opération de clic par la souris virtuelle dans une scène de réalité étendue.

12. Le système de la revendication 10, dans lequel l'affichage monté sur la tête (100) est en outre configuré pour :
déterminer si un objet s'est déplacé dans la zone de détection (900) en fonction du premier signal (61-64 ; 71, 73, 75, 77, 78 ; 81, 82) ; et
en réponse à la détermination du déplacement de l'objet à travers la zone de détection (900), effectuer une opération de défilement à l'aide de la souris virtuelle dans une scène de réalité étendue.

13. Méthode de contrôle à distance de la réalité étendue par une souris virtuelle, adaptée à un système (10) comprenant un affichage monté sur la tête (100) et une première télécommande (210) destinée à être portée sur une main (500), dans laquelle la méthode comprend :
capturer (S101, S301) une image par l'affichage monté sur la tête (100) ;
détecter (S102) l'image pour obtenir les premières données de la main (500) dans l'image et les secondes données d'un plan (600) dans l'image par l'affichage monté sur la tête (100) ;
activer (S103) la souris virtuelle en fonction des premières données et des secondes données par l'affichage monté sur la tête (100) ;
recevoir (S303) un premier signal (61-64 ; 71, 73, 75, 77, 78 ; 81, 82) généré par une première unité de mesure inertielle (2141) de la première télécommande (210) par l'affichage monté sur la tête (100) ;
effectuer un clic avec la souris virtuelle dans une scène de réalité étendue en fonction du premier signal (61-64 ; 71, 73, 75, 77, 78 ; 81, 82) ;
détection d'un premier crête d'onde et d'une première vallée d'onde du premier signal (61-64 ; 71, 73, 75, 77, 78 ; 81, 82) ;
en réponse à un premier point temporel du premier crête d'onde plus tardif qu'un second point temporel de la première vallée d'onde, effectuer une première opération de défilement à l'aide de la souris virtuelle dans une scène de réalité étendue ; et
en réponse au premier point temporel du premier crête d'onde qui est antérieur au deuxième point temporel de la première vallée d'onde, effectuer une deuxième opération de défilement par la souris virtuelle dans la scène de réalité étendue.

14. La méthode de la revendication 13, dans laquelle les premières données comprennent une première articulation (J1) de la main (500), et la méthode comprend en outre :
déterminer si une distance entre la première articulation (J1) et le plan (600) est inférieure ou égale à un seuil de distance en fonction des premières données et des secondes données fournies par le dispositif monté sur la tête (100) ; et
en réponse à la distance inférieure ou égale au seuil de distance, activer la souris virtuelle par le dispositif monté sur la tête (100).

15. La méthode de la revendication 14, dans laquelle les premières données comprennent une pluralité d'articulations (J1, J2, J3) de la main (500), y compris la première articulation (J1), et la méthode comprend en outre :
déterminer si un angle (θ) formé par la pluralité d'articulations (J1, J2, J3) est inférieur ou égal à un seuil d'angle par le dispositif monté sur la tête (100) ; et
en réponse à l'angle (θ) inférieur ou égal au seuil d'angle, activer la souris virtuelle par le dispositif monté sur la tête (100).
